# EUROPEAN PATENT APPLICATION

(11) **EP 1 959 175 A1**
(43) Date of publication of application: **20.08.2008**
(21) Application number: 07460029.7
(22) Date of filing: 16.10.2007
(51) Int. Cl.: F16K 1/22

(54) **Disc of butterfly valve and a method to manufacture**

(30) Priority: 13.02.2007 PL 38175407
(71) Applicant: Spalony, Wojciech, 61-622 Poznan (PL)
(72) Inventor: Spalony, Wojciech, 61-622 Poznan (PL)
(74) Representative: Ciupinski, Zbigniew

(57) **Abstract**

Two asymmetrical covers are formed from metal sheets by plastic working (1, 13) and the sleeve-enforcement unit is placed between them (3). All the elements are joined inseparably and all the space limited with covers (1, 13) is filled with filler (10).

The disc of the throttling valve contains two covers (1, 13) inseparably joined together and the sleeve-enforcement unit (3), whose spacer pipe (4) is inseparably joined to the enforcement segments (5) fixed on it.

The throttling valve is used as a cutting-off or a regulating element in installations carrying gases and liquids.

## Description

The invention concerns the method of manufacturing the throttling valve disc and the valve disc itself. The throttling valve is used as a cutting-off or regulating element in systems that carry gases or fluids.

The method of manufacturing the valve disc is known from the Polish application description no P-375177. In that description sheets of particular metal are plastic-worked into two identical, convex covers in a shape of a circle with recesses. Between those covers in the recesses there is a sleeve-reinforcement unit, composed of a spacer pipe with ribs and sleeves fixed on its ends: the centralizing and driver one. The unit installed thus, composed of two convex covers and the sleeve-reinforcement unit are inseparably connected. Then the space between the convex covers is filled up through one of the sleeves with appropriate filler, particularly resin-based.

The method of manufacturing throttling valves of PAEK or its derivatives in the form of a stamping made on a injection moulding press in a feeding channel of a combustion engine is known from DE 103 17 505 A1.

The disc of the throttling valve, circular and convex, containing two identical covers inseparably joined at the edge is known from the description of the Polish invention registration no P-375177. The covers are also inseparably joined to the sleeve-enforcement unit. The unit is composed of a driver and centralizing sleeve, fixed between the covers on the spacer pipe. The spacer pipe, which has apertures to enable the filler flow, has ribs fixed. All the space between the covers is filled with appropriate filler, particularly resin-based one.

DE 103 17 505 A1 presents a blocking body for a flow-through channel, which has a throttling valve made of PAEK or its derivatives, two connected dished discs that make up an enclosed, empty space in the feeding channel of the combustion engine.

The manufacturing method of the throttling valve disc as described in the invention consists in plastic forming of a convex cover from a metal sheet, its cross-section resembling the letter "C", and forming another convex cover, which closes up the space limited with the other cover. The spacer pipe is placed in enforcement segments, each of which has two parallel sides joined at the ends and fixed to the spacer pipe. Then, in the manner already known, a spacer pipe is placed between the covers with the driver sleeve and the centralizing one, fixed at its ends, then they are pressed together and joined inseparably. The space of the throttling valve is filled with filler, preferably based on modified polymer concrete.

The disc of the throttling valve, convex and circular in shape as in the invention, with two covers inseparably joined with the sleeve-enforcement unit containing the driver and the centralizing sleeves, fixed between the covers on a spacer pipe and filled with appropriate filler, is characterized by one cover in the cross-section of the "C" letter, while the other closes off the space limited by the first one. The spacer pipe is fixed on enforcement segments which have two parallel sides joined together at the ends and the pipe is joined to them inseparably.

According to the invention the manufactured disc of the throttling valve has surface of its circular perimeter which constitutes a monolithic fragment of a cover of significant size and smoothness accuracy. This part of the disc surface which touches, when closed, the valve seal, ensures its tightness.

The disc of the throttling valve according to the invention requires less welding, and the part of the disc surface that is in contact with the valve seal, when closed, does not require any additional working, which reduces manufacturing cost.

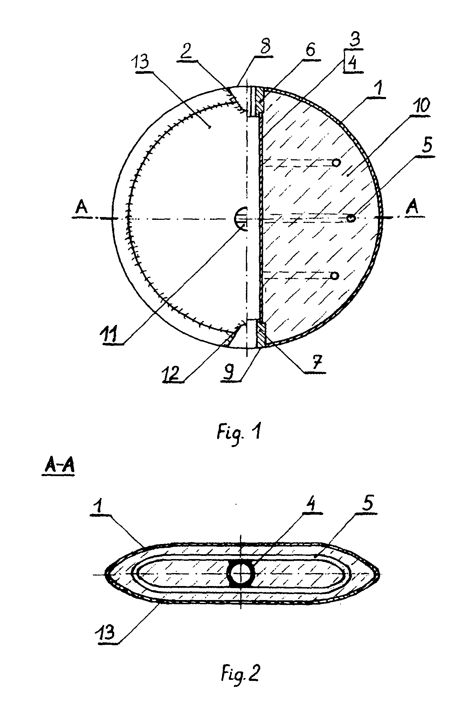

An example of the invention performance is shown in the picture, where fig. 1 presents the valve disc seen from the front with partial cross-section, fig. 2 shows the cross-section of the disc of the throttling valve.

### Example I

Cover 1 is formed from a sheet of steel and cover 13 is formed in the shape of die stampings with recesses 2. The sleeve-enforcement unit 3 contains the spacer pipe 4, fixed in enforcement segments 5 an welded to join those enforcement segments with the spacer pipe. The spacer pipe, with the driver sleeve 6 and the centralizing sleeve 7 fixed at its ends, is placed between the covers 1, 13. Then all of them are pressed together and joined by welding. Further on, through aperture 11 in cover 13 the disc of the throttling valve is filled up with modified polymer concrete 10. After final hardness of the polymer concrete that fills up the inside of the disc is obtained, aperture 11 is welded up and the disc is ready to be installed in the throttling valve.

### Example II

The disc of the throttling valve contains two asymmetric metal covers 1, 13 and the sleeve-enforcement unit 3 fixed between them in the recesses 3. The unit is composed of the spacer pipe 4, to which enforcement segments are welded 5 and of the driver sleeve 6 and the centralizing sleeve 7. The covers 1, 13 are joined together; they are also joined with the driver sleeve 6 and the centralizing sleeve 7 by means of welds 12. Front surfaces 8, 9 of the sleeve are spherical. In cover 13 there is a technical aperture 11. The disc of the throttling valve is filled with a mixture of quartz with resin.

## Claims

1. The manufacturing method of the throttling valve disc, in which two convex covers are plastic-formed from metal sheets, with circular edges with recesses and the sleeve-enforcement unit placed between them, containing the spacer pipe with driver and centralizing sleeves fixed on its ends, with the covers pressed together to each other and to the sleeve-enforcement unit and joined inseparably, and all the space between the covers later filled with filler, is **characterised by** forming a cover (1) of the "C"-shaped cross-section and forming another cover (13) closing off the space limited with the cover (1), while the spacer pipe (4) is fixed in enforcement segments (5) which have two parallel sides joined together at the ends and then the spacer pipe (4) is inseparably joined to enforcement segments (5), then between the covers (1, 13) the spacer pipe is placed (4) with the driver sleeve (6) and the centralizing sleeve (7) fixed at its ends, all the elements are pressed together and joined inseparably and the empty space in the disc of the throttling valve is filled with filler (10), preferably based on modified polymer concrete.

2. The throttling valve disc, circular and convex, with two covers inseparably joined together and inseparably joined to the sleeve-enforcement unit with the driver sleeve and the centralizing one fixed between the covers on the spacer pipe, while the space between the covers is filled with filler, is **characterised by** one cover (1) having a "C"-shaped cross-section, and the other cover (13) closing off the space limited with the cover (1), while the spacer pipe (4) is fixed in enforcement segments (5) which have two parallel sides joined together at the ends and is inseparably joined to them.
